# EUROPÄISCHE PATENTANMELDUNG

(11) **EP 2 615 659 A1**
(43) Veröffentlichungstag der Anmeldung: **17.07.2013**
(21) Anmeldenummer: 13151382.2
(22) Anmeldetag: 15.01.2013
(51) Int. Cl.: H01M 2/02, H01M 2/10, H01M 10/50

(54) **Universell passende und anpassbare, thermisch isolierende Umhüllung eines Akkumulators oder einer Batterie von Elektrohandwerkzeugen**

(30) Priorität: 15.01.2012 DE 102012100316
(71) Anmelder: Hofmann, Brita, 01328 Dresden (DE)
(72) Erfinder: Hofmann, Brita, 01328 Dresden (DE)
(74) Vertreter: Weissfloh, Ingo

(57) **Zusammenfassung**

Die Aufgabe der Erfindung besteht darin, eine universell passende und anpassbare, thermisch isolierende Umhüllung eines Akkus oder einer Batterie von Elektrohandwerkzeugen zu schaffen, welche einfach und kostengünstig herstellbar ist und durch jene die Wärmeisolationswirkung effizient erreicht wird.

Die erfindungsgemäße universell anpassbare und passende, thermisch isolierende Umhüllung 1 eines Akkumulators 2 oder einer Batterie 2 von Elektrohandwerkzeugen besteht aus einer im Wesentlichen eckigen Grundfläche 3, welche an den jeweiligen Außenkanten der Grundfläche 3 Seitenflügel 4 besitzt. Die Seitenflügel laufen im Bereich der jeweils benachbarten seitlichen Queraußenkanten 5 der Seitenflügel 4 im Bereich der Ecken der Grundfläche 3 zusammen. In diese Umhüllung 1 ist der jeweilige Akkumulator 2 oder die jeweilige Batterie 2 einsteckbar oder wird von der Umhüllung 1 umlegt.

Das Anwendungsgebiet der Erfindung liegt in der Herstellung von thermisch isolierenden Umhüllungen von Akkumulatoren oder Batterien von Elektrohandwerkzeugen.

## Beschreibung

Universell passende, thermisch isolierende Umhüllung eines Akkumulators oder einer Batterie von Elektrohandwerkzeugen insbesondere für das Arbeiten in kalten Umgebungen.

Es ist ein bekanntes Problem, dass sich die Kapazitäten von Akkumulatoren oder Batterien, welche dem Einfluss niedriger Umgebungstemperaturen unterliegen, aufgrund des Anstiegs des Innenwiderstandes sowie des Erliegens des chemischen Umwandlungsprozesses stark reduzieren und somit nur eine kurze Nutzung ermöglichen. Die aus der DE 102 169 06 A1 bekannte Lösung, einen Teil der in den Akkumulatoren vorhandenen gespeicherte Energie über eine Widerstandsheizung zur Temperierung des Akkumulators zu benutzen, löst zwar das Temperaturproblem, jedoch steht auch hier nicht mehr die gesamte Kapazität des Akkumulators für die Benutzung zur Verfügung, da ein Teil der Energie über die Widerstandsheizung verbraucht wird.

Der Ansatz, die Batterie oder den Akkumulator zu isolieren, führt zur DE 88 02 123 U1. Die vorgeschlagene Lösung ist zwar umfassend und interessant. Jedoch ist deren Umsetzung nur sehr aufwändig und eine universelle Anwendung ist nur bedingt möglich.

Unter Berücksichtigung der vorgenannten Lösungen besteht daher die Aufgabe der Erfindung, eine universell passende und anpassbare, thermisch isolierende Umhüllung eines Akkus oder einer Batterie von Elektrohandwerkzeugen zu schaffen, welche einfach und kostengünstig herstellbar ist und durch jene die Wärmeisolationswirkung effizient erreicht wird.

Mit der Erfindung wird im angegebenen Anwendungsfall erreicht, dass eine universell passende, thermisch isolierende Umhüllung eines Akkus oder einer Batterie von Elektrohandwerkzeugen geschaffen wird, wobei an einer im Wesentlichen der Akkugrundfläche entsprechenden eckigen Grundfläche der Umhüllung an den jeweiligen Außenkanten der Grundfläche Seitenflügel vorhanden sind. Die jeweils benachbarten seitlichen Queraußenkanten laufen im Bereich der Ecken der Grundfläche an der jeweiligen Ecke zusammen, um eine bestmögliche Abdeckung und eine daraus resultierende bestmögliche Wärmeisolationswirkung zu erzielen. Es wird erreicht, dass durch einen geringen Materialeinsatz eines geeigneten flexiblen Isolationswerkstoffes eine umfassende thermische Isolation als Umhüllung um einen Akkumulator oder eine Batterie gelegt werden kann. Unter den Bedingungen einer sehr niedrigen Umgebungstemperatur werden zum Einen die Akkumulatoren sowie Batterien gegen diese niedrige Temperatur geschützt. Zum Anderen wird die Abgabe der durch den Stromfluss bei der Benutzung entstehenden Abwärme durch die Umhüllung am Entweichen gehindert.

Vorteilhafte Ausgestaltungen der Erfindung sind in den Ansprüchen 2 bis 14 dargestellt.

Indem nach Anspruch 2 die Grundfläche aus Grundflächensegmenten besteht, lassen sich zum Einen kompliziertere Grundflächen abbilden und zum Anderen universelle Umhüllungsfragmente herstellen, welche mit geringem Aufwand in die endgültige Grundform gebracht werden können.

Die universell passende thermisch isolierende Umhüllung erfährt eine Weiterbildung nach Anspruch 3, indem in den Ecken Eckflügel vorhanden sind. Hierdurch wird die Isolationswirkung in den Ecken verbessert. Zusätzlich werden Passungenauigkeiten ausgeglichen.

Nach Anspruch 4 sind an den Seitenflügeln seitlich fahnenähnliche Überstände vorhanden. Hierdurch wird die Wärmeisolierwirkung im Eckbereich verbessert.

Mit der Weiterbildung nach Anspruch 5 sind die einzelnen Seitenflügel als umlaufender Streifen ausgeführt. Hierdurch vereinfacht sich die Montage um den Akkumulator. Zusätzlich werden Wärmeisolationsverluste durch Stoßstellen oder Übergangsstellen vermieden.

Die Weiterbildung nach Anspruch 6 gilt der Befestigung der Seitenflügel untereinander sowie der Eckflügel mit den Seitenflügeln sowie der Befestigung der Seitenflügel mit der Grundfläche durch Klettverschlüsse. Hierdurch wird ein hohes Maß an Flexibilität erreicht. Die Passform kann individuell nachgebessert werden. Der zuverlässige Sitz bleibt dabei erhalten.

Nach Anspruch 7 ist zur Verbindung der Grundfläche, Seitenflügel und der Eckflügel ein Reißverschluss vorgesehen. Hierdurch wird eine sichere Verbindung der jeweiligen Einzelteile ermöglicht. Auch beim robusten Einsatz ist die zuverlässige thermische Isolierung gewährleistet.

Indem nach Anspruch 8 die seitlichen Flügel mittels einer Raffschnur zusammenziehbar sind, lassen sich Passungenauigkeiten einfach ausgleichen und dabei die Isolierwirkung aufrechterhalten.

Nach Anspruch 9 besteht die Umhüllung aus einem sackähnlichen Stück, wodurch die Umhüllung größenunabhängig ist und somit universell an unterschiedlichsten Akkumulatoren und Batterien einsetzbar ist.

Bei der Weiterbildung nach Anspruch 10 sind auf den Oberflächen zusätzliche Isolierstoffe vorgesehen. Hierdurch wird die Isolierwirkung verbessert.

Nach Anspruch 11 sind die jeweiligen Flächen zumindest doppelwandig ausgeführt und mit Isolierstoffen ausgefüllt. Hierdurch wird die Isolierwirkung ebenfalls verbessert.

Nach Anspruch 12 ist ein zumindest an zwei gegenüberliegenden Seitenflügeln befestigbarer Verbindungsflügel vorgesehen. Hierdurch wird die Isolationswirkung auch von oben verbessert und zusätzlich der Halt der Umhüllung verbessert.

Indem nach Anspruch 13 der Verbindungsflügel auch über die seitlich benachbarten Seitenflügel überschlagbar ist, verbessert sich die Isolierwirkung und der Sitz bzw. Halt der Umhüllung.

Durch eine bewegliche Verbindung der Grundfläche mit den Seitenflügeln ist nach Anspruch 14 eine formunabhängige Anpassung an den Akkumulator oder Batterie leicht möglich.

Mehrere Ausführungsbeispiele der Erfindung sind in den Zeichnungen dargestellt und werden im Folgenden näher beschrieben. Es zeigen:
Fig. 1 eine Darstellung einer flächig ausgebreiteten Umhüllung mit Seitenflügeln und Eckflügeln,
Fig. 2 eine Darstellung einer flächig ausgebreiteten Umhüllung mit Seitenflügeln und Eckflügeln und mit einer auf der Grundfläche und den Seitenflächen zusätzlichen Isolationsschicht,
Fig. 3 eine Darstellung einer flächig ausgebreiteten Umhüllung mit Reißverschlüssen zwischen den jeweils benachbarten seitlichen Queraußenkanten der Seitenflügel,
Fig. 4 eine Darstellung einer flächig ausgebreiteten Umhüllung mit Klettverschlüssen und fahnenähnlichen Überständen an seitlichen Queraußenkanten der Seitenflügel,
Fig. 5 eine Darstellung einer flächig ausgebreiteten Umhüllung mit Raffschnur,
Fig. 6 eine räumliche Darstellung einer Umhüllung mit als umlaufenden Streifen ausgebildeten Seitenflügel und mit Raffschnur,
Fig. 7 eine räumliche Darstellung einer Umhüllung mit Seitenflügeln und Eckflügeln,
Fig. 8a eine räumliche Darstellung einer Umhüllung mit als umlaufenden Streifen ausgebildeten Seitenflügel und mit Verbindungsflügel,
Fig. 8b eine räumliche Darstellung einer Umhüllung mit als umlaufenden Streifen ausgebildeten Seitenflügel und mit Verbindungsflügel,
Fig. 9 eine räumliche Darstellung einer Umhüllung mit eingesetzten Akkumulator bzw. Batterie mit als umlaufenden Streifen ausgebildeten Seitenflügel und mit Verbindungsflügel und mit eingesetzten Akkumulator bzw. eingesetzter Batterie,
Fig. 10 eine räumliche Darstellung einer Umhüllung mit als umlaufenden Streifen ausgebildeten Seitenflügel und mit Raffschnur mit eingesetzten Akkumulator bzw. eingesetzter Batterie und
Fig. 11 eine Umhüllung bestehend aus mehreren Umhüllungsfragmenten in räumlicher Darstellung.

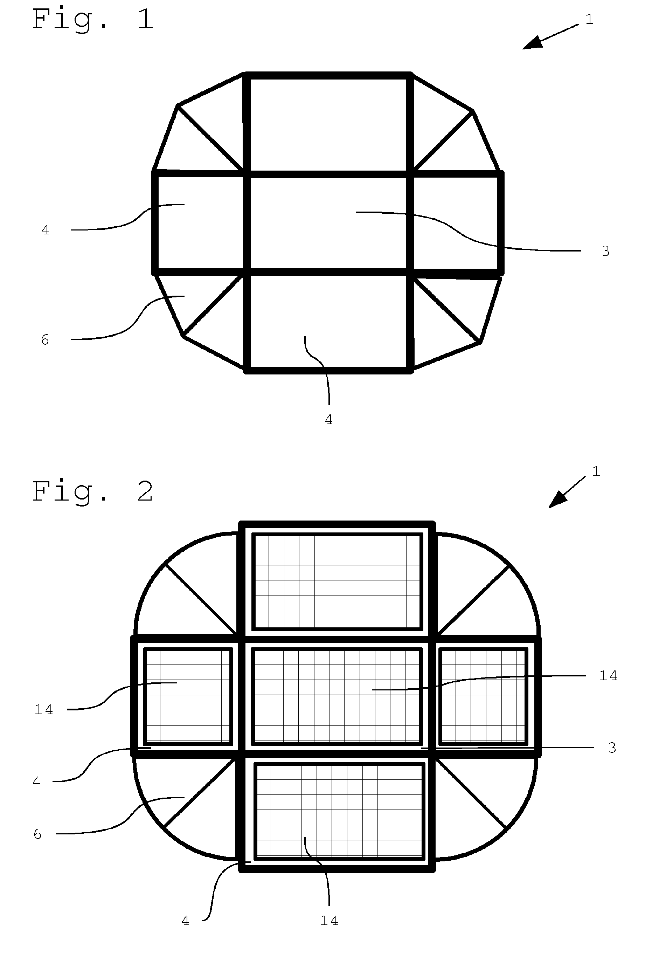

Die erfindungsgemäße universell passende thermisch isolierende Umhüllung 1 für von außen angebrachte Akkumulatoren 2 oder Batterien 2 von Elektrohandwerkzeugen besitzt eine im Wesentlichen eckige Grundfläche 3. An der Umhüllung 1 sind, wie in den Figuren 1 bis 5 dargestellt, an den jeweiligen Außenkanten der Grundfläche 3 Seitenflügel 4 angeordnet und z. B. durch vernähen an der Grundfläche 3 befestigt. Die Seitenflügel 4 sind hierbei insofern um die Außenkanten der Grundfläche 3 beweglich ausgeführt, so dass ein Anlegen der Umhüllung 1 an oder um den Akkumulator 2 oder die Batterie 2 einfach möglich ist. Die jeweils benachbarten seitlichen Queraußenkanten 5 der Seitenflügel 4 laufen im Bereich der Ecken der Grundfläche 3 zusammen.

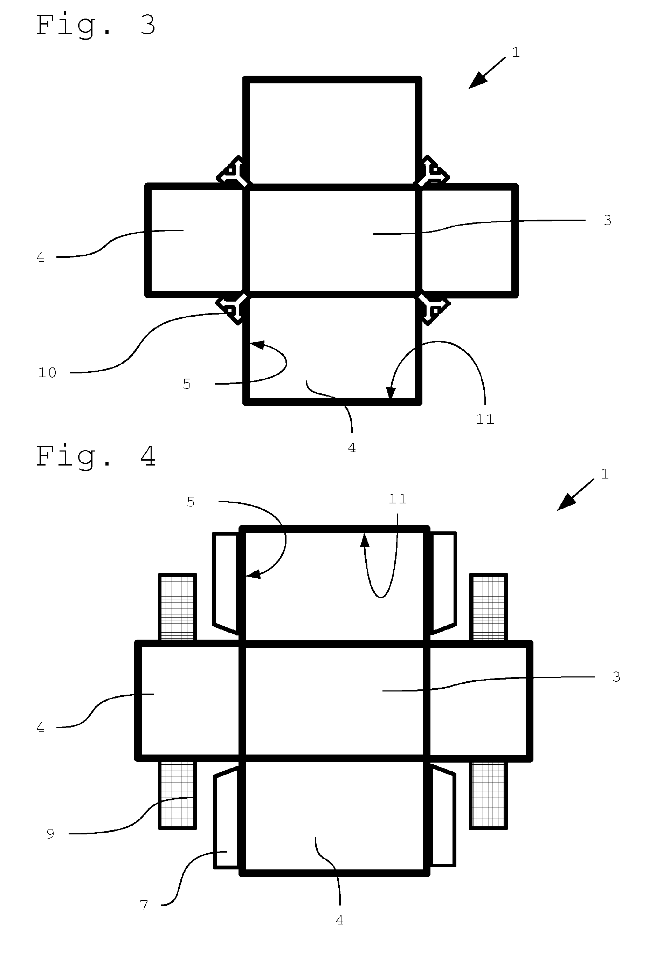

Die Seitenflügel 4 lassen sich nach oben anordnen, so dass in die dadurch gebildete Umhüllung 1 der jeweilige Akkumulator 2 oder die jeweilige Batterie 2 einsteckbar ist. Die Umhüllung 1 lässt sich jedoch auch um den jeweiligen Akkumulator 2 oder die jeweilige Batterie 2 anlegen. Für einen sicheren Halt sind, wie in Figur 4 dargestellt, an zwei gegenüberliegenden Seitenflügeln 4 an jeweils beiden seitlichen Queraußenkanten 5 Klettverschlüsse 9 vorhanden. Diese lassen sich auf die jeweils benachbarten Seitenflügel 4 auf jeweils komplementären Klettverschlüssen 9 befestigen.

Zusätzlich sind in den Bereichen zwischen benachbarten seitlichen Queraußenkanten 5 der Seitenflügel 4 Eckflügel 6 vorhanden. Diese sind jeweils an beide benachbarten seitlichen Queraußenkanten 5 der Seitenflügel 4 genäht oder mittels Klettverschlüsse 9 daran befestigt. Diese Eckflügel 6 besitzen, wie in den Figuren 1 und 2 dargestellt, eine eckige Grundform oder eine kreissektorförmige Grundform. Vorgesehen ist darüber hinaus, dass die Eckflügel nur mit der Grundfläche 3 verbunden sind. Hierfür sind die Eckflügel 6 direkt in der Ecke an die Grundfläche 3 angenäht.

Eine weitere Möglichkeit zu den Eckflügeln 6 sind fahnenähnliche Überstände 7. Diese sind jeweils an jeweils nur einen der beiden benachbarten seitlichen Queraußenkanten 5 der Seitenflügel 4 befestigt. Diese fahnenähnliche Überstände 7 besitzen die Grundform eines Rechteckes oder eine Trapezes.

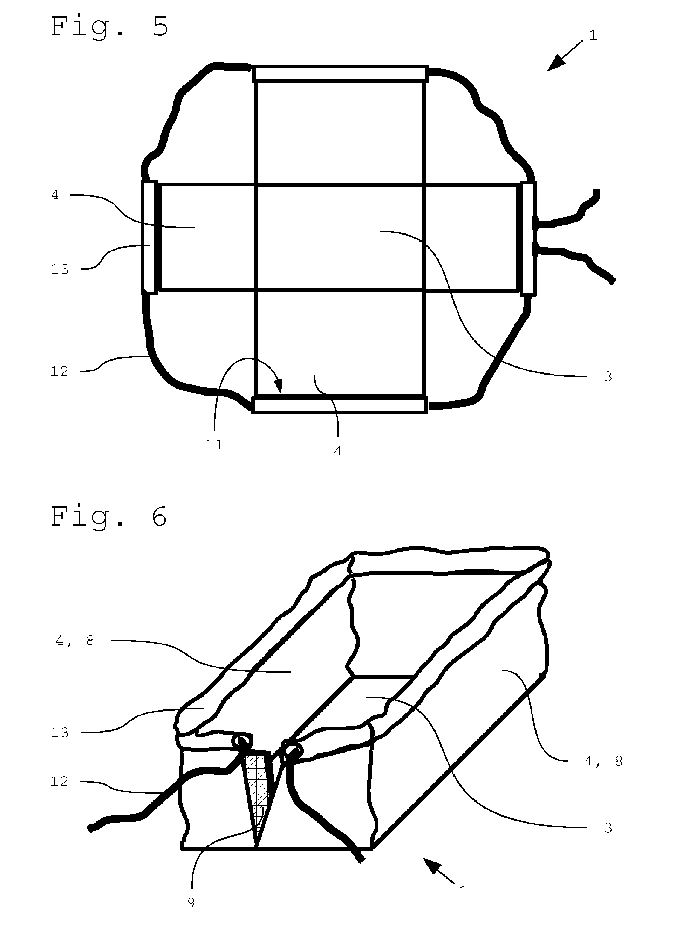

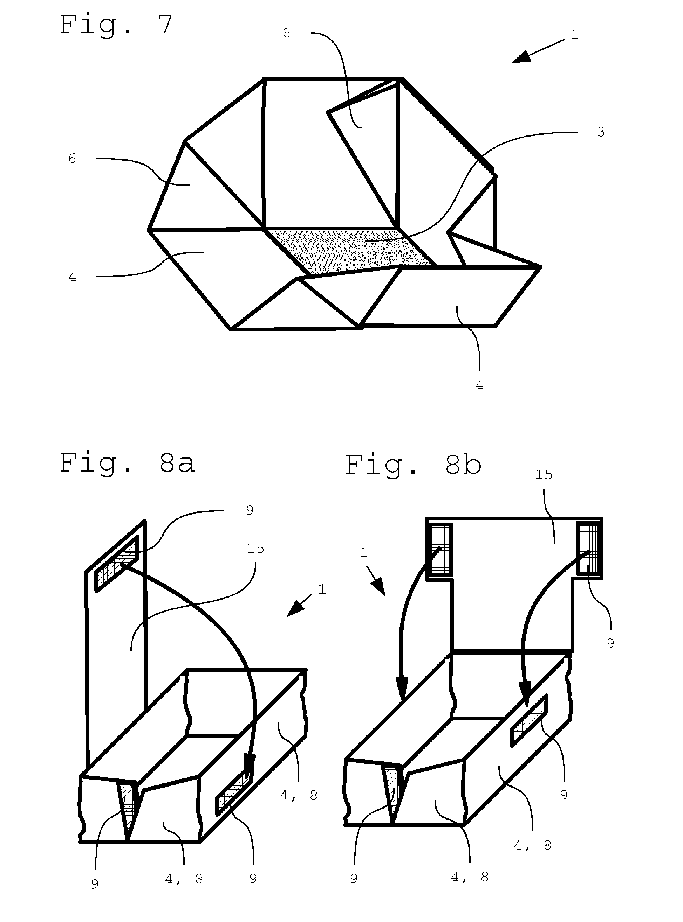

Die Figuren 6 und 8 zeigen als weiteres Ausführungsbeispiel einen Seitenflügel 4 der als umlaufender Streifen 8 zusammengefasst an den Außenkanten der Grundfläche 3 durch vernähen befestigt ist. Hierbei überlappen sich die mit einem Klettverschluss 9 versehenen Queraußenkanten 5 der Enden des umlaufenden Streifens 8.

Die Grundfläche 3, die Seitenflügel 4 und die Eckflügel sowie der umlaufenden Streifens 8 und die Grundfläche 3 sind jeweils durch vernähen mit einander verbunden. Als weitere Möglichkeit des Verbindens ist der Einsatz von Reißverschlüssen 10 vorgesehen. Hierbei sind als Kombination beider Möglichkeiten die Seitenflügel 4 an die Grundfläche 3 genäht. Die Seitenflügel 4 sind jedoch, wie in Figur 3 dargestellt, an ihren benachbarten seitlichen Queraußenkanten 5 durch Reißverschlüsse 10 verbunden.

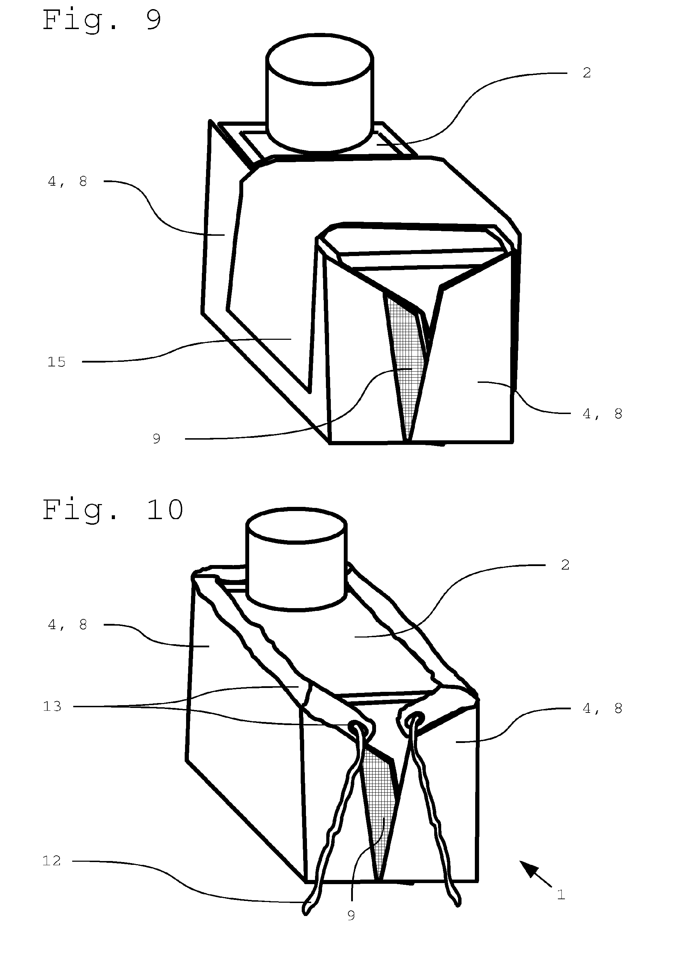

Für einen noch zuverlässigeren Halt ist, wie in den Figuren 8a bis 9 dargestellt, zusätzlich zu den Seitenflügeln 4 ein Verbindungsflügel 15 vorhanden. Dieser Verbindungsflügel 15 ist an einem Seitenflügel 4 befestigt. Der Verbindungsflügel 15 ist nach oben über die Umhüllung und um die Umhüllung und den darin vorhanden Akkumulator 2 oder der Batterie 2 schwenkbar. Der Verbindungsflügel 15 bedeckt und überdeckt dabei die Oberfläche des Akkumulators 2 oder der Batterie 2. Der Verbindungsflügel 15 ist mindestens bis zum gegenüberliegenden Seitenflügel 4 überschlagbar ausgeführt und lösbar mittels einem Klettverschluss 15 befestigt. Dieser Verbindungsflügel 15 ist weiterhin so ausführbar, dass der Verbindungsflügel 15 ausgehend von einem Seitenflügel 4 über die beiderseits benachbarten Seitenflügel 4 übergeschlagen und an ihnen mittels Klettverschluss 15 oder Druckknöpfen befestigt ist.

Die Umhüllung 1 besitzt weiterhin, wie in den Figuren 5, 6 und 10 dargestellt, an den Längsaußenkanten 11 der Seitenflügel 4 einen Hohlsaum 13 für eine Raffschnur 12. Diese Raffschnur 12 ist auch durch an den Längsaußenkanten 11 vorhandene beabstandet angeordnete Öffnungen 13 hindurchführbar. Hierdurch ist es möglich die Umhüllung 1 gewissermaßen wie ein Sack um den Akkumulator 2 oder die Batterie 2 zu spannen.

Je nach Umgebungsbedingungen ist es notwendig zusätzliche Isolierstoffe 14 in oder an die Umhüllung platzieren zu können. Diese Isolierstoffe 14 sind, wie in der Figur 2 dargestellt, zum Einen auf der Oberfläche der Grundfläche 3 und der Seitenflügel 4 angeordnet. Es ist jedoch auch vorgesehen, dass die Isolierstoffe 14 in die zumindest doppelwandige Grundfläche 3 sowie doppelwandigen Seitenflügel 4 einsetzbar sind.

Eine einfache Ausführung der Erfindung besteht aus einer aus einem Stück gefertigten sackähnlichen Umhüllung 1. Bei dieser Umhüllung sind die Grundfläche 1, die Seitenflügel 4 und die Eckflügel 6 aus einem Stück gefertigt. Am äußeren Rand ist ein Hohlsaum 13 vorhanden, durch den eine Raffschnur 12 geführt ist. Diese Umhüllung 1 ist einfach um einen Akkumulator 2 oder eine Batterie 2 anordbar und mittels der Raffschnur 12 sicher fixierbar.

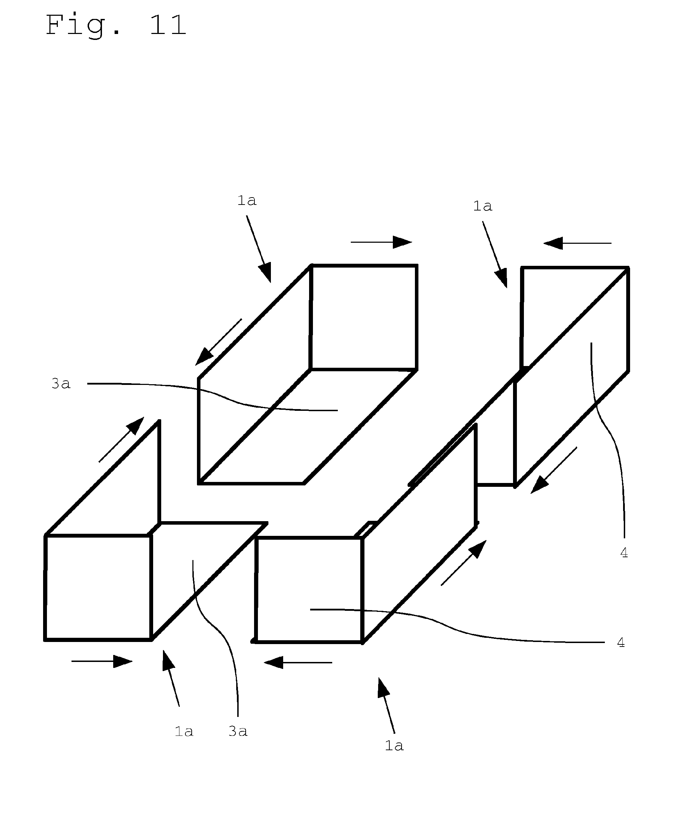

In einem weiteren Ausführungsbeispiel besteht, wie in Figur 11 dargestellt, die Grundfläche 3 aus mehreren Grundflächensegmenten 3a mit an den Längsaußenkanten 11 vorhandenen Seitenflügeln 4. Die so gebildeten Umhüllungsfragmente 1a lassen sich problemlos um den Akkumulator 2 oder die Batterie 2 anordnen und mittels einer Raffschnur 12, einem Gummiband 16 oder Klettverschlüssen 9 fixieren. Vorteil an diesen Umhüllungsfragmenten 1a besteht in der Herstellung der Fragmente in einer beliebige Einheitsgröße, welche durch den Anwender auf die tatsächlich notwendige Größe zugeschnitten werden kann oder mittels vorgegebenen Sollbruchstellen gebrochen werden kann. Zusätzlich lassen sich die dadurch entstandenen Begrenzungskanten verkleben.

Die zunächst beweglichen Übergangsstellen zwischen der Grundfläche 3 und der den Seitenflügeln 4 sind durch verkleben stabilisierbar. Hierdurch entsteht eine einem Kasten ähnliche Grundform, welche einen sicheren Stand des Gerätes auf dem Akkumulator 2 oder der Batterie 2 ermöglicht.

Die Anwendung verschiedenster Materialien sowie deren Kombination sind vorgesehen. Sie ist beispielsweise als Material für die Umhüllung Neopren vorgesehen, da eine Verarbeitung einfach möglich ist und auch bei geringen Materialstärken eine gute Isolierwirkung erzielt wird. Die Umhüllung 1 ist weiterhin als feste Umhüllung 1 ausgeführt. Hierfür sind beispielsweise Styroporelemente miteinander und aneinander verbunden.

### Zusammenstellung der Bezugszeichen

1 - Umhüllung
1a - Umhüllungsfragment
2 - Akkumulator, Batterie
3 - Grundfläche,
3a - Grundflächensegment
4 - Seitenflügel
5 - Queraußenkante
6 - Eckflügel
7 - Überstand
8 - umlaufender Streifen
9 - Klettverschluss
10 - Reißverschluss
11 - Längsaußenkante
12 - Raffschnur
13 - Öffnung, Hohlsaum
14 - Isolierstoff
15 - Verbindungsflügel
16 - Gummiband

## Patentansprüche

1. Universell passende und anpassbare, thermisch isolierende Umhüllung (1) eines Akkumulators (2) oder einer Batterie (2) von Elektrohandwerkzeugen, wobei der Akkumulator (2) oder die Batterie (2) von außen an das Elektrohandwerkzeug angebracht sind,
**dadurch gekennzeichnet,**
**dass** an einer im Wesentlichen eckigen Grundfläche (3) der Umhüllung (1) an den jeweiligen Außenkanten der Grundfläche (3) Seitenflügel (4) vorhanden sind, und die jeweils benachbarten seitlichen Queraußenkanten (5) der Seitenflügel (4) im Bereich der Ecken der Grundfläche (3) an der jeweiligen Ecke zusammenlaufen und dass in die Umhüllung (1) der jeweilige Akkumulator (2) oder die jeweilige Batterie (2) einsteckbar ist oder die Umhüllung (1) um den jeweiligen Akkumulator (2) oder die jeweilige Batterie (2) anlegbar ist.

2. Umhüllung nach Anspruch 1,
**dadurch gekennzeichnet,**
**dass** die Grundfläche (3) aus einem, zwei oder mehr Grundflächensegmenten (3a) besteht und dass die Grundflächensegmente (3a) mit den an den jeweiligen Außenkanten angeordneten Seitenflügeln (4) ein Umhüllungsfragment (1a) bilden und zusammensetzbar ausgebildet ist.

3. Umhüllung nach den Ansprüchen 1 und 2,
**dadurch gekennzeichnet,**
**dass** im Eckbereich der Grundfläche (3) oder der Grundflächensegmente (3a) jeweils zwischen benachbarten seitlichen Queraußenkanten (5) der Seitenflügel (4) ein in der Fläche eckiger oder kreissektorförmiger Eckflügel (6) vorhanden ist und mit den seitlichen Queraußenkanten (5) der Seitenflügel (4) und/oder mit der Grundfläche (3) verbunden ist.

4. Umhüllung nach einem der vorhergehenden Ansprüche,
**dadurch gekennzeichnet,**
**dass** an den jeweiligen seitlichen Queraußenkanten (5) der Seitenflügel (4) fahnenähnliche Überstände (7) vorhanden sind.

5. Umhüllung nach einem der vorhergehenden Ansprüche,
**dadurch gekennzeichnet,**
**dass** die Seitenflügel (4) als umlaufender Streifen (8) zusammengefasst und an den Außenkanten der Grundfläche (3) oder der Grundflächensegmente (3a) befestigt sind und sich die Queraußenkanten (5) der Enden des umlaufenden Streifens (8) überlappen.

6. Umhüllung nach einem der vorhergehenden Ansprüche,
**dadurch gekennzeichnet,**
**dass** die Übergangsstellen an den Seitenflügel (4) und/oder an der Grundfläche (3) oder an den Grundflächensegmenten (3a) und/oder an den Eckflügeln (6) jeweils gegeneinander oder selbst aneinander durch verkleben, vernähen und/oder mittels Knöpfen, Gummibändern (16) und/oder Klettverschlüssen (9) verbunden sind.

7. Umhüllung nach einem der vorhergehenden Ansprüche,
**dadurch gekennzeichnet,**
**dass** an den jeweils benachbarten seitlichen Queraußenkanten (5) zweier Seitenflügel (4) ein die beiden Seitenflügel (4) untereinander und/oder an den Eckflügeln (6) mit den Seitenflügeln (4) und/oder ein an den Außenkanten der Grundfläche (3) oder der Grundflächensegmente (3a) die Grundfläche (3) oder die Grundflächensegmente (3a) mit den Seitenflügel (4) verbindender Reißverschluss (10) vorhanden ist.

8. Umhüllung nach einem der vorhergehenden Ansprüche,
**dadurch gekennzeichnet,**
**dass** im Bereich der Längsaußenkanten (11) der Seitenflügel (4) eine Raffschnur (12) vorhanden ist, wobei die Raffschnur (12) durch Öffnungen (13) und/oder durch einen Hohlsaum (13) geführt ist.

9. Umhüllung nach einem der vorhergehenden Ansprüche,
**dadurch gekennzeichnet,**
**dass** die Grundfläche (3) und die Seitenflügel (4) und die Eckflügel (4) aus einem Stück bestehen und am umlaufenden Rand mittels Raffschnur (12) zu einer sackähnlichen Umhüllung (1) ausgebildet ist, wobei die Raffschnur (12) durch Öffnungen (13) und/oder durch einen Hohlsaum (13) geführt ist.

10. Umhüllung nach einem der vorhergehenden Ansprüche,
**dadurch gekennzeichnet,**
**dass** auf den Oberflächen der Grundfläche (3) oder Grundflächensegmente (3a) und/oder der Seitenflügel (4) und/oder der Eckflügel (6) zusätzliche Isolierstoffe (14) angeordnet, aufgebracht und/oder eingearbeitet sind.

11. Umhüllung nach einem der vorhergehenden Ansprüche,
**dadurch gekennzeichnet,**
**dass** die Grundfläche (3) oder die Grundflächensegmente (3a) und/oder die Seitenflügel (4) und/oder die Eckflügel (6) mindestens doppelwandig ausgeführt sind und in den dadurch gebildeten Zwischenräumen zusätzliche Isolierstoffe (14) eingebracht und/oder eingearbeitet sind.

12. Umhüllung nach einem der vorhergehenden Ansprüche,
**dadurch gekennzeichnet,**
**dass** an mindestens einem Seitenflügel (4) mindestens ein Verbindungsflügel (15) vorhanden ist und mindestens bis zum gegenüberliegenden Seitenflügel (4) überschlagbar ausgeführt ist und lösbar befestigt ist.

13. Umhüllung nach einem der vorhergehenden Ansprüche,
**dadurch gekennzeichnet,**
**dass** der Verbindungsflügel (15) an mindestens einem der jeweils seitlich benachbarten Seitenflügel (4) überschlagbar ausgeführt ist und lösbar befestigt ist.

14. Umhüllung nach Anspruch 1, 3 bis 13,
**dadurch gekennzeichnet,**
**dass** die Seitenflügel (4) um die Außenkanten der Grundfläche (3) beweglich ausgeführt sind.
